# EUROPEAN PATENT APPLICATION

(11) **EP 4 679 349 A1**
(43) Date of publication of application: **14.01.2026**
(21) Application number: 25189107.3
(22) Date of filing: 11.07.2025
(51) Int. Cl.: G06Q 30/0601, G06Q 50/00

(54) **AUTOMATIC WEBSTORE GENERATION**

(30) Priority: 12.07.2024 US 202418771246
(71) Applicant: Sociate AI Limited, St Asaphs LL17 0RN (GB)
(72) Inventor: ROBINSON, Luke Anthony William, St Asaphs, LL17 0RN (GB); Weaver, Yasmin Topia, St Asaphs, LL17 0RN (GB)
(74) Representative: Marks & Clerk LLP

(57) **Abstract**

Described herein there is a method performed on a system of one or more computers, the method comprising: for each entity of a plurality of entities: receiving, at a processor of the one or more computers, entity data, first item data and consumer data and determining corresponding volumes based on corresponding subspaces defined by one or more corresponding mutli-dimensional digital signatures. The method further comprises receiving, at the processor, second item data comprising a plurality of second item data points, each one of the plurality of second item data points relating to a respective second item and comprising text and image data; processing, at the processor, each one of the second item data points using the digital signature generator to generate a respective second item multi-dimensional digital signatures; identifying, by the processor, one or more second item multi-dimensional digital signatures that fall within an intersection of the entity volume, the first item volume and the consumer volume; selecting, by the processor and based on the identified one or more second item multi-dimensional digital signatures, one or more second items that correspond to the identified one or more second item multi-dimensional digital signatures; responsive to selecting the one or more second items, populating a webstore associated with the entity by: establishing a connection with a webserver; identifying, using the entity data, the webstore hosted by the webserver and associated with the entity; for each one of the selected one or more second items: querying a database to identify an existing item listing for the selected second item; generating link data to link the existing item listing; and adding the link data to the webstore to enable third parties to purchase the selected second item from the webstore.

## Description

### FIELD

This application relates to a method of automatic webstore generation.

### BACKGROUND

Webstores are one or more webpages that allow a consumer to purchase products or services. Products or services may collectively be referred to as items. Webstores provide a convenient way for consumers to purchase items.

However, generation and / or updating the webpages of the webstore requires specialist, technical input. That is, modifying (i.e. generation and / or updating) a webstore may require knowledge of a programming language, for example, HTML or JavaScript. It will be appreciated that other knowledge may be required, for example, an understanding of how to provide a web-server that can store the webpage of the webstore.

Modifying a webstore may also require an understanding of information related to the physical world. For example, information regarding availability of items may be required to modify a webstore. In particular, up-to-date stock levels of items may be needed to modify a webstore. Similar considerations (e.g. capacity to deliver a service) may also apply to webstores that allow consumers to purchase services. Other considerations may include the ability of the items to be provided to the consumer i.e. whether an item can be delivered to an address of the consumer. Information related to the physical world, such as that discussed above, may be contained in a database. Thus modifying a webstore may also require technical knowledge relating to databases. For example, the webstore may be arranged to continuously interact with the database to display up-to-date stock levels and update the stock levels once an item has been purchased.

Modifying a webstore therefore requires specialist knowledge. Even for those with the required specialist knowledge, modifying one portion of a webstore may inadvertently modify another portion of the webstore. This may cause a loss of sales or another detrimental effect. Therefore, manual modification of webstores may be avoided where possible.

This is particular problematic for webstores that should be changed relatively often. For example, webstores that change the items that are available for purchase relatively often may require more input from a specialist and may be more likely to suffer a detrimental effect from inadvertent modification.

Webstores are typically static. That is, items that are available for purchase are the same for all users and are displayed with an identical arrangement. Thus, while one user may have different interests to another user, both users will see the same items arranged the same way. In other words, the webstore is not personalised for at least one user. This arrangement may be detrimental to the experience of the at least one user and may deter the at least one user from purchasing items.

It is an object of the present invention to solve one or more of the problems associated with the prior.

### SUMMARY

In a first example described herein there is a method performed on a system of one or more computers, the method comprising: for each entity of a plurality of entities: receiving, at a processor of the one or more computers, entity data relating to an entity and comprising a plurality of entity data points, the plurality of the entity data points comprising text and image data; processing, at the processor, the plurality of entity data points using a digital signature generator to generate one or more entity multi-dimensional digital signatures in a multi-dimensional space, the one or more entity multi-dimensional digital signatures defining an entity subspace within the multi-dimensional space; and determining an entity volume based on the entity subspace.

The method further comprises: receiving, at the processor, first item data comprising a plurality of first item data points, each one of the plurality of first item data points relating to a respective first item and comprising text and image data; processing, at the processor, the plurality of first item data points using the digital signature generator to generate a one or more first item multi-dimensional digital signatures in the multi-dimensional space, the one or more first item multi-dimensional digital signatures defining a first item subspace within the multi-dimensional space; and determining a first item volume based on the first item subspace.

The method further comprises: receiving, at the processor, consumer data comprising a plurality of consumer data points, each one of the plurality of consumer data points relating to a respective consumer; processing, at the processor, the plurality of consumer data points using the digital signature generator to generate one or more consumer multi-dimensional digital signatures, the one or more consumer multi-dimensional digital signatures defining a consumer subspace within the multi-dimensional space; and determining a consumer volume based on the consumer subspace.

The method further comprises receiving, at the processor, second item data comprising a plurality of second item data points, each one of the plurality of second item data points relating to a respective second item and comprising text and image data; processing, at the processor, each one of the second item data points using the digital signature generator to generate a respective second item multi-dimensional digital signatures; identifying, by the processor, one or more second item multi-dimensional digital signatures that fall within an intersection of the entity volume, the first item volume and the consumer volume; and selecting, by the processor and based on the identified one or more second item multi-dimensional digital signatures, one or more second items that correspond to the identified one or more second item multi-dimensional digital signatures.

The method further comprises responsive to selecting the one or more second items, populating a webstore associated with the entity by: establishing a connection with a webserver; identifying, using the entity data, the webstore hosted by the webserver and associated with the entity; for each one of the selected one or more second items: querying a database to identify an existing item listing for the selected second item; generating link data to link the existing item listing; and adding the link data to the webstore to enable third parties to purchase the selected second item from the webstore.

By use of the method, the webstore associated with the entity may be automatically modified to allow the one or more second items to be purchased. It will be appreciated that the term 'item' may be used to refer to products and / or services.

As an example, an entity (to which the entity data relates) may be a particular user of social media. The entity may be, for example, a user with many followers and may be referred to as an influencer. The entity data may be data relating to the user's publications on social media. The first item data may be indicative of items that have been sold recently and / or that are in stock. In some examples, the first item data may correspond to popular items. The consumer data may correspond to consumers related to the entity. For example, the consumer data may correspond to followers of the influencer.

By use of the digital signature generator to generate the multi-dimensional digital signatures, one or more second items may be selected that are likely to be popular with the followers of the influencer. In response to the selecting the items, the webstore may be modified to allow the selected item to be purchased. In this way, a webstore associated with the entity may be updated to allow items that are expected to be popular to be purchased. In other words, items that are available to be sold may be filtered based on what has recently been selling well.

It will be appreciated that the term "associated with" means related to, or having a link (such as a financial link) with the entity, such that a user accessing the webstore associated with the entity will understand that the webstore is associated with the entity. It will be further appreciated that the webstore associated with the entity may not need input from or the agreement of entity. The webstore associated with the entity may not be owned by the entity.

It will also be appreciated that each volume of the multi-dimensional space may be referred to as a hyper-volume or a region.

The digital signature generator may be an embedding neural network. The one or more entity multi-dimensional digital signatures may be one or more entity embeddings. The one or more first item multi-dimensional digital signatures may be one or more first item embeddings. The one or more consumer multi-dimensional digital signatures may be one or more consumer embeddings. The second item multi-dimensional digital signatures may be one or more second item embedding.

It will be appreciated that in other examples the digital signature generator may be any other type of appropriate neural network.

Each one of the plurality of entity data points may further comprise: video data; location data; and / or audio data.

In examples in which the entity is a user of social media, the entity data may further comprise data relating to the followers of the user.

The text of each of the first item data points may comprise a text description of a colour of the respective first item. Additionally or alternative, the text may comprise a label and / or brand associated with the respective first item. Other examples of data that may be associated with each of the data points include a price and a season.

Determining the entity volume may comprise determining the entity volume as the entity subspace. Determining the first item volume may comprise determining the first item volume as the first item subspace. Determining the consumer volume may comprise determining the consumer volume as the consumer subspace.

In other words, each of the volumes may be the same as the corresponding subspace defined by the respective multi-dimensional digital signature. Accordingly, the intersection of the entity volume, the first item volume and the consumer volume (used to identify the second item multi-dimensional digital signatures) may be the same as, or equivalent to, an intersection of the entity subspace, first item subspace and the consumer subspace.

In other examples, each volume may be determined based on a measure of distance (in the multi-dimensional space) from the corresponding subspace. The measure of distance may also be referred to as a measure of similarity. The measure of similarity may be a cosine similarity, a Euclidean distance and / or an earthmovers distance. Thus, a volume may comprise a respective subspace and additional portions of the multi-dimensional space that are within a certain measure of distance to the respective subspace.

Each one of the plurality of entity data points may comprise data relating to one or more publication.

In other words, the one or more publications may have been published by the entity. The one or more publications may have been published on a website, for example, a social media website.

The one or more publications may relate to an item. For example, the one or more publications may each comprise an image depicting the item. Additionally or alternative, the one or more publications may each comprise text relating to the item.

Each of the plurality of entity data points, the first item data points, the plurality of consumer data points, and the plurality of second item data points may further comprise timing data.

Beneficially, by use of timing data, the method may be used to predict what items may be popular at a subsequent time point. In other words, each of the data points may relate to a first period of time and the method may be used to determine second items that may be popular in a second period of time. Put differently, trend information may be used.

The method may further comprise: storing, in computer readable memory of the one or more computers, the first item volume; and receiving, subsequent to the storing and from the computer readable memory, the first item volume.

That is, the first item volume may be determined at an earlier time point and stored in computer readable memory. In other words, the first item volume may be determined in advance. When selecting the second items, the first item volume may be received from the computer readable memory. In this way, the one or more computer may avoid the need to determine the first item volume when determining the selected item.

It will be appreciated that, additionally or alternatively, the entity volume and / or the consumer volume may be stored and received in similar ways.

One or more of the plurality of second item data points may relatee to a respective second item that is not currently stocked by the webstore. The method may further comprise, responsive to a second item being selected that is not currently stocked by the webstore: causing stock levels of the second item to be changed.

That is, when a second item is not in stock, the second item may be automatically stocked.

More generally, the method may cause stock level to be changed for any selected second item. For example, the method may cause stock levels of the selected item to be increased. Beneficially, this may dynamically change stock levels in accordance with the identification of items.

The method may further comprise responsive to identifying that one or more second item multi-dimensional digital signatures do not fall within the intersection, determining that the respective one or more second items is a deselected item; responsive to determining the deselected item: identifying second link data that links an item listing for the deselected item; and removing the second link data from the webstore associated with the entity.

In other words, the method may also be used to modify the webstore to automatically remove items. In this way, the items available for purchase on the webstore may be limited to those that have been selected by the method.

The method may further comprise receiving user input to select a third item; responsive to receiving the user input to select the third item: generating third link data to link an item listing for the third item; and adding the third link data to the webstore to enable third parties to purchase the third item from the webstore.

The method may further comprise: receiving user input to deselect a fourth item; responsive to receiving the user input to deselect the fourth item identifying fourth link data that links an item listing for the fourth item; and removing the fourth link data from the webstore associated with the entity.

That is, the system may allow for the webstore to be automatically modified in response to manual selection / deselection of items.

Each one of the consumer data points may relates to: the respective consumer's ownership of an item; the respective consumer's ownership of a class of an item; the respective consumer's attitudes towards an item or brand; an interaction event between the respective consumer and a representation of an item or brand; and / or one or more previous purchases made by the respective consumer.

In other words, the consumer data points may describe the consumers and their shopping habits. In this way, the selected second items may by items a particular consumer is more likely to purchase.

In examples in which the entity is a user of social media, the entity data may comprise data relating to followers of the users. In particular, the entity data points may relate to a respective follower's ownership of an item; the respective follower's attitudes towards an item or brand; the respective follower's ownership of an item; and / or one or more previous purchases made by the respective follower.

It will be appreciated that the method may comprise use of a likelihood function. For example, determining each volume from a respective subspace may comprise determining a respective likelihood function based on the respective subspace. That is, an entity likelihood function may be determined based on the entity subspace. Determining a likelihood function may comprise optimizing the likelihood function based on, for example, the multi-dimensional digital signatures that define the respective subspace.

As a further example, rather than determining the volumes based on the respective subspaces and identifying second item multi-dimensional digital signatures based on the intersection of the volumes, a single likelihood function may be determined. For example, the single likelihood function determined based on each of the subspaces. That is, the single likelihood function may be determined based on the entity subspace, the first item subspace, and the consumer subspace. In such examples, rather than using the intersection, the single likelihood function may be used to identify the one or more second item multi-dimensional digital signatures.

While the method has been described in relation to populating a webstore associated with the entity in response to selecting of one or more second items, it should be appreciate that, additionally or alternatively, the method may comprise outputting information relating to one or more publications for the entity. That is, the method may comprise: receiving, at the processor, second entity data comprising text and / or image data; processing, at the processor, each one of the second entity data points using the digital signature generator to generate a respective second entity multi-dimensional digital signatures; identifying, by the processor, one or more second entity multi-dimensional digital signatures that fall within an intersection of the entity volume, the first item volume and the consumer volume; selecting, by the processor and based on the identified one or more second entity multi-dimensional digital signatures, one or more second entity data points that correspond to the identified one or more second item multi-dimensional digital signatures; and output, by the processor, the one or more second entity data points.

Each of the second entity data points may correspond to a draft publication (i.e. text and / or an image that is intended for publication but that has not yet been published). By use of the method, draft publications may be selected that are expected to be popular and / or that may increase traffic to the webstore associated with the entity (and thus increase the number of purchase made through the webstore).

In a second example described herein there is a non-transitory machine-readable medium storing instructions that, when executed by processing circuitry, cause the processing circuitry to perform operations comprising: for each entity of a plurality of entities: receiving, at the processing circuitry, entity data relating to an entity and comprising a plurality of entity data points, the plurality of the entity data points comprising text and image data; processing, at the processing circuitry, the plurality of entity data points using a digital signature generator to generate one or more entity multi-dimensional digital signatures in a multi-dimensional space, the one or more entity multi-dimensional digital signatures defining an entity subspace within the multi-dimensional space; and determining an entity volume based on the entity subspace.

The operations may further comprise: receiving, at the processing circuitry, first item data comprising a plurality of first item data points, each one of the plurality of first item data points relating to a respective first item and comprising text and image data; processing, at the processing circuitry, the plurality of first item data points using the digital signature generator to generate a one or more first item multi-dimensional digital signatures in the multi-dimensional space, the one or more first item multi-dimensional digital signatures defining a first item subspace within the multi-dimensional space; and determining a first item volume based on the first item subspace.

The operations may further comprise: receiving, at the processing circuitry, consumer data comprising a plurality of consumer data points, each one of the plurality of consumer data points relating to a respective consumer; processing, at the processing circuitry, the plurality of consumer data points using the digital signature generator to generate one or more consumer multi-dimensional digital signatures, the one or more consumer multi-dimensional digital signatures defining a consumer subspace within the multi-dimensional space; and determining a consumer volume based on the consumer subspace.

The operations may further comprise: receiving, at the processing circuitry, second item data comprising a plurality of second item data points, each one of the plurality of second item data points relating to a respective second item and comprising text and image data; processing, at the processing circuitry, each one of the second item data points using the digital signature generator to generate a respective second item multi-dimensional digital signatures; identifying, at the processing circuitry, one or more second item multi-dimensional digital signatures that fall within an intersection of the entity volume, the first item volume and the consumer volume; and selecting, at the processing circuitry and based on the identified one or more second item multi-dimensional digital signatures, one or more second items that correspond to the identified one or more second item multi-dimensional digital signatures.

The operations may further comprise: responsive to selecting the one or more second items, populating a webstore associated with the entity by: establishing a connection with a webserver; identifying, using the entity data, the webstore hosted by the webserver and associated with the entity; for each one of the selected one or more second items: querying a database to identify an existing item listing for the selected second item; generating link data to link the existing item listing; and adding the link data to the webstore to enable third parties to purchase the selected second item from the webstore.
In a third example described herein, there is a system comprising: processing circuitry; and a memory storing instructions that, when executed by processing circuitry, cause the processing circuitry to perform operations comprising: for each entity of a plurality of entities: receiving, at the processing circuitry, entity data relating to an entity and comprising a plurality of entity data points, the plurality of the entity data points comprising text and image data; processing, at the processing circuitry, the plurality of entity data points using a digital signature generator to generate one or more entity multi-dimensional digital signatures in a multi-dimensional space, the one or more entity multi-dimensional digital signatures defining an entity subspace within the multi-dimensional space; and determining an entity volume based on the entity subspace.

The operations may further comprise: receiving, at the processing circuitry, first item data comprising a plurality of first item data points, each one of the plurality of first item data points relating to a respective first item and comprising text and image data; processing, at the processing circuitry, the plurality of first item data points using the digital signature generator to generate a one or more first item multi-dimensional digital signatures in the multi-dimensional space, the one or more first item multi-dimensional digital signatures defining a first item subspace within the multi-dimensional space; and determining a first item volume based on the first item subspace.

The operations may further comprise: receiving, at the processing circuitry, consumer data comprising a plurality of consumer data points, each one of the plurality of consumer data points relating to a respective consumer; processing, at the processing circuitry, the plurality of consumer data points using the digital signature generator to generate one or more consumer multi-dimensional digital signatures, the one or more consumer multi-dimensional digital signatures defining a consumer subspace within the multi-dimensional space; and determining a consumer volume based on the consumer subspace.

The operations may further comprise: receiving, at the processing circuitry, second item data comprising a plurality of second item data points, each one of the plurality of second item data points relating to a respective second item and comprising text and image data; processing, at the processing circuitry, each one of the second item data points using the digital signature generator to generate a respective second item multi-dimensional digital signatures; identifying, at the processing circuitry, one or more second item multi-dimensional digital signatures that fall within an intersection of the entity volume, the first item volume and the consumer volume; and selecting, at the processing circuitry and based on the identified one or more second item multi-dimensional digital signatures, one or more second items that correspond to the identified one or more second item multi-dimensional digital signatures.

The operations may further comprise: responsive to selecting the one or more second items, populating a webstore associated with the entity by: establishing a connection with a webserver; identifying, using the entity data, the webstore hosted by the webserver and associated with the entity; for each one of the selected one or more second items: querying a database to identify an existing item listing for the selected second item; generating link data to link the existing item listing; and adding the link data to the webstore to enable third parties to purchase the selected second item from the webstore.

### BRIEF DESCRIPTION OF THE DRAWINGS

Embodiments of the invention will now be described, by way of example only, with reference to the accompanying schematic drawings, in which:
- Figure 1 is a flow diagram of an example method for modifying a webstore;
- Figure 2 is a flow diagram of an example method for determining a volume;
- Figures 3A and 3B each depict an examples of a publication;
- Figure 4 is a flow diagram of an example method for populating a webstore; and
- Figure 5 depicts an example computer system that may be used to perform the methods described herein.

### DETAILED DESCRIPTION

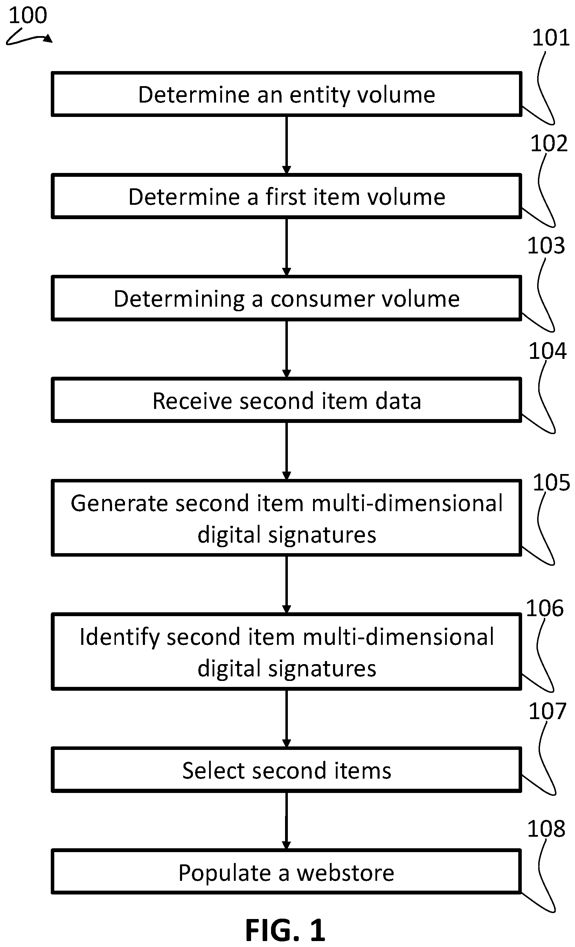

Figure 1 is a flow diagram of an example method 100 for modifying a webstore. At step 101, an entity volume is determined. At step 102, a first item volume is determined. At step 103, a consumer volume is determined. At step 104, second item data is received. At step 105, second item multi-dimensional digital signatures are generated. At step 106, second item multi-dimensional digital signatures are identified. At step 107, second items are selected. At step 108, a webstore is populated.

Beneficially, by use of the method 100, a webstore may be populated with second items that are expected to be popular with subscribers of the entity. Thus, the entity can be provided with a link to the webstore and can share the link to the webstore and sell second items. As a further benefit, the webstore may automatically update in response to changes in any of the input data (including, for example, the publications made by the entity). That is, the second items that are available on the webstore may change and the entity may not need to provide a different link to the webstore to sell the changed second items. Thus the webstore may update automatically without any input from, or on behalf of, the entity. In particular, the webstore may be updated in response to the interests of a user of a webstore. In other words, the webstore may be personalised for each user.

Each of the volume that are determined by the method 100 may be representative of different behaviour clusters. For example, each determined volume may correspond to how dense a behaviour cluster is. Thus by combining each of the volumes, the method 100 may advantageously model causal relationships between the different behaviour clusters allowing second items to be selected that are expected to be popular. That is, the causal relationship may correspond to a causal link between an entity and a behaviour of subscribers of the entity.

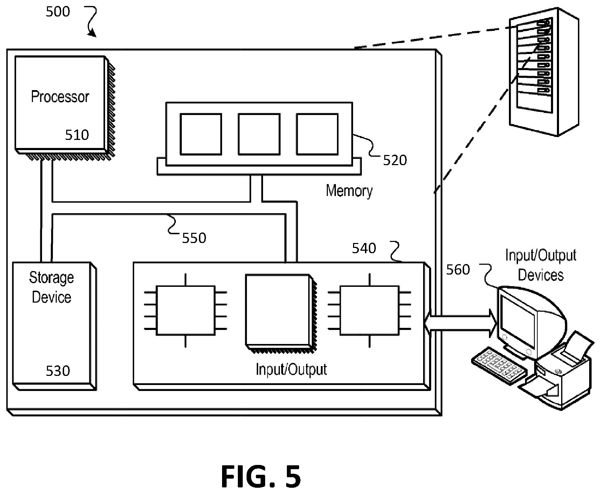

The method 100 may be performed on a system of one or more computers. For example, the method 100 may be perform on the computer 500 depicted in Figure 5.

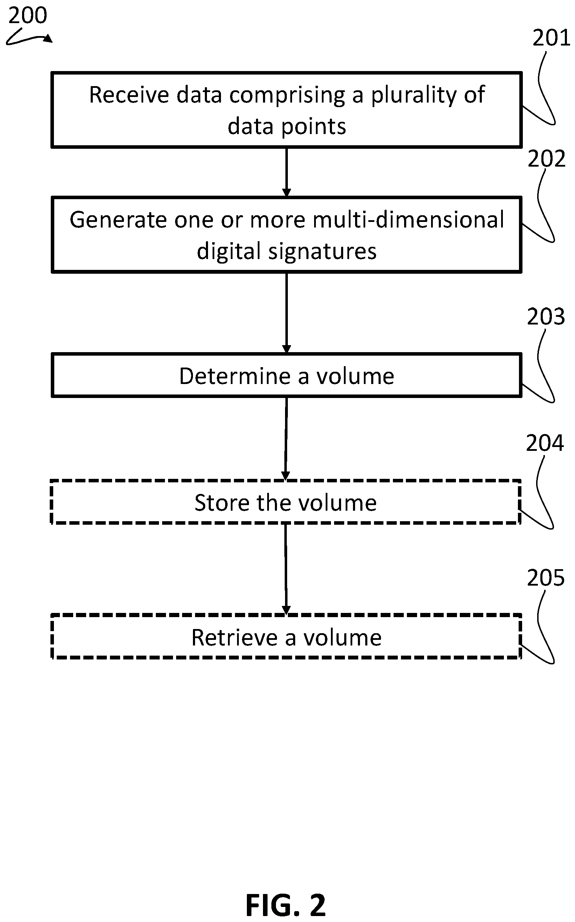

At step 101, an entity volume is determined. The entity volume may be determined using the example method 200 shown in Figure 2.

Figure 2 is a flow diagram of an example method 200 for determining a volume. At step 201, data comprising a plurality of data points is received. At step 202, one or more multi-dimensional digital signatures are generated. At step 203, a volume is determined. At optional step 204, the volume is stored. At optional step 205, the volume is retrieved.

At step 201, data comprising a plurality of data points is received. The data may be received 201 by a processor of a computer performing the method 200. Each of the plurality of data points may comprise similar types of data. For example, each one of the plurality of data points may comprise text and image data.

At step 202, one or more multi-dimensional digital signatures are generated. For example, a multi-dimensional digital signature may be generated 202 for each data point of the data points received at step 201. Each multi-dimensional digital signature may be one or more numbers that represent the corresponding data point in a multi-dimensional space. Each multi-dimensional digital signature may also have one or more tags. Each tag may be, for example, a piece of meta-data. The one or more tags may allow for subsequent analysis.

Generating 202 the one or more multi-dimensional digital signatures may comprise use of a digital signature generator. The same digital signature generator may be used to generate 202 all of the one or more multi-dimensional digital signatures received 201 as part of the data. As described below in more detail, the method 200 may be performed multiple times i.e. once for each datum (the datum itself comprising a plurality of data points) for a set of multiple data. The same digital signature generate may be used to generate 202 all of the multi-dimensional digital signatures for every data point of every datum. Accordingly, every multi-dimensional digital signature may be in the same multi-dimensional space.

The digital signature generator (that is used to generate 202 the multi-dimensional digital signatures) may be a neural network, for example, an embedding neural network. In such examples, each multi-dimensional digital signature may be an embedding of a respective data point. In some examples, the digital signature generator may be an encoder neural network. In such examples, each multi-dimensional digital signature may be an encoding or an encoded value i.e. an encoding of one or more data points. The multi-dimensional digital signatures may also be referred to as latent representations.

The one or more multi-dimensional digital signatures may define a subspace of the multi-dimensional space. That is, a region of the multi-dimensional space may be occupied by, or proximate to, the set of multi-dimensional digital signatures that are generated 202 from the same plurality of data points.

It will be appreciated that the step of generating 202 the multi-dimensional digital signatures will depend on a data type of the plurality of data points. As mentioned above, in some examples, each data point may comprise text and image data. In examples in which each data point comprises image data, generating 202 the multi-dimensional digital signatures may comprise analysing pixel data of each image data.

At step 203, a volume is determined. The volume may be based on the subspace i.e. the subspace within the multi-dimensional space that is defined by the one or more multi-dimensional digital signatures. The volume may also be referred to as a hyper-volume.

In some examples, the volume be the same as the subspace. That is, determining 203 the volume may comprise determining the volume is the subspace.

In other examples, the volume may be determined 203 based on a measure of distance. For example, the volume may be determined 203 based on a measure of distance from a centre of the subspace. As an alternative example, the volume may be determined 203 based on a measure of distance from an average point of the subspace and / or an edge of the subspace. The measure of distance may also be referred to as a measure of similarity. The measure of similarity may be, or may be based on a cosine similarity, a Euclidean distance and / or an earthmovers distance.

In other examples, determining 203 the volume may comprise use of a clustering metric. The clustering metric may also be referred to as a grouping metric. As an example, determining 203 the volume may comprise determining a local density of the multi-dimensional digital signatures. Further examples of clustering metrics that may be used to determine the volume include a nearest neighbour distance and / or a local topology. In some examples, the clustering metric may be a hierarchical clustering technique.

It should be appreciated that the determined volume may comprise the subspace and further portions of the multi-dimensional space. Alternatively, the determined volume may be a portion of the subspace.

At optional step 204, the volume may be stored. That is, the volume determined at step 203 may be stored. The volume may be stored in computer readable memory that is connected to the processors performing the method 200.

At optional step 205, the volume may be received. Receiving the volume from the computer readable memory that is connected to the processors performing the method 200 and in which the volume was previously stored. In some examples, the volume may be retrieved by the processors from the computer readable memory. Beneficially, by determining, storing, and retrieving the volume in this way, each volume may determine in advance of the rest of the method 100 being performed.

Returning to Figure 1 and step 101, the method 200 for determining a volume may be used to determine an entity volume. That is, entity data may be received (i.e. step 201). The entity data may comprise a plurality of entity data points. The plurality of entity data points may be processed using the digital signature generator to generator one or more entity multi-dimensional digital signatures defining an entity subspace (i.e. step 202). An entity volume may be determined based on the entity subspace (i.e. step 203).

The entity data may relate to an entity. For example, the entity may be a publisher of digital content. The entity may be a user of a publishing website. In particular, the entity may be a user of a social media website. The entity may be a user with a large number of subscribers or followers and may be referred to as an influencer.

Each of the entity data points may comprise text and / or image data. For example, each of the entity data points may correspond to a publication made by the entity. In examples in which the entity is a user of a social media website, the publications may be posts made by the user on the social media website. The entity data points may relate to posts on a single social media website. Alternatively, the entity data points may be relate to posts made on a plurality of social media websites. In this way, posts made on different social media websites can be combined.

Each of the entity data points may further comprise video data, location data and / or audio data. For example, it will be appreciated that some publications may comprise video data and the entity data points may comprise the video data. The publications may relate to a particular location. For example, a publication may contain text indicative of the particular location (e.g. "#London"). Additionally or alternatively, a publication may have been published by the entity while the entity was at a particular location and the particular location may be stored in a separate data field of the entity data point. The particular location may be represented by the location data of each entity data point.

The entity data points may relate to one or more interactions events between the entity and a representation of an item or brand. Example interaction events included clicking on content shown on a website e.g. 'likes' on a social media website.

In some examples, the entity data may comprise data relating to subscribers of the entity. For example, if the entity is a user of a social media website, the entity data may comprise data relating to followers of the user. In some examples, the entity data may comprise data relating to all subscribers of the entity. In other examples, the entity data may comprise data relating to a subset of the subscribers, for example, the subset may subscribers of the entity with a particular interest. In particular, the entity data points may relate to a respective follower's ownership of an item; the respective follower's attitudes towards an item or brand; the respective follower's ownership of an item; and / or one or more previous purchases made by the respective follower. Additionally or alternatively, the entity data points may relate to one or more interactions events between a respective follower and a representation of an item or brand. The follower's attitudes may be determined based on, for example, a rate of scrolling used by the respective follower when navigating a social media website.

Each of the entity data points may further comprise timing data. For example, a publication may contain text indicative of a particular time period (e.g. "#Summer"). Additional or alternatively, a publication may have been published by the entity at a particular time point and the particular time point may be stored in a separate data field of the entity data point. The particular time point may be represented by the timing data of each entity data point.

It will be appreciated that the entity data may comprise data that is not visible to the public when corresponding publications are published. For example, the entity data may be provided by a computer system and may include an IP address associated with each publication. Other data may be provided, for example, analytics data relating to the number of views or number of engagements associated with each publication.

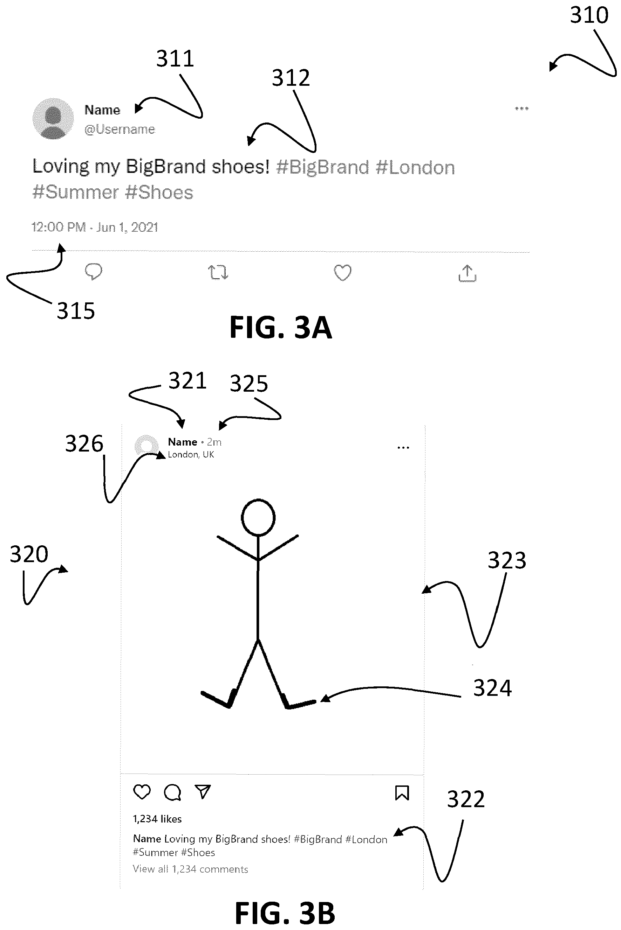

Figure 3A shows a first example publication 310. The first example publication 310 (and the second example publication 320 discussed below) are each examples of a publication to which an entity data point may relate. Both of the first and second example publications 310, 320 are posts on social media websites.

The first example publication 310 comprises a name and username 311. In examples in which the entity data relates to publications from a single website, all of the publications may be published under the same username 311. However, it will be appreciated that a single entity may use multiple accounts with different usernames and / or may use different usernames across different websites.

The first example publication 310 further comprises published text 312. As can be seen in Figure 3A, the published text 312 may comprise text referring to an item (e.g. BigBrand shoes) or a class of items (e.g. a type of item, such as shoes, or another attribute, such as a brand or label e.g. "BigBrand"). The referral may be explicit or implicit. As an example, the published text 312 may explicitly refer to an item (e.g. BigBrand shoes) as shown in Figure 3A. As an alternative, the published text 312 may implicitly refer to an item by referencing, for example, a tagline of a marketing campaign or including any other data which would allow someone to infer the reference.

As can also be seen in Figure 3A, the first example publication 310 comprises timing data 315. The timing data 315 may indicate the time the first example publication 310 was composed and / or published. Additionally or alternatively, the timing data 315 may indicate how much time has passed since the publication was composed and / or published. Additionally or alternatively, timing data 315 may be relate to a specific time or event and be inferred from the published text 312. For example, the published text 312 comprises the text "#Summer" indicating the publication relates to summertime.

The first example publication 310 comprises location data. The location data may be inferred from the published text 312. For example, the published text 312 comprises the text "#London" indicating the publication relates to London. Additionally, or alternatively, the location data may be explicitly shown with the publication. As a further alternative, the entity data may comprise location data relating to each publication. That is, the location data may be stored by a publishing website (i.e. the website that publishes the publication). Such location data may or and may not be shown alongside the publication. In some examples, the location data may be determined by the publishing website and may be based on the IP address of a device on which the publication was composed.

Figure 3B shows a second example publication 320. Similar to the first example publication 310, the second example publication 320 comprises a username 321, published text 322, and timing data 325.

The second example publication 320 further comprises image data 323. In the second example publication 320, the image data 323 depicts an item 324. Similar to the publication text 312 (discussed above in relation to the first example publication 310), the image data 323 may explicitly or implicitly refer to the item 324. The image data 323 may be in the form of video data.

Returning to Figure 1 and the method 100, at step 102, a first item volume is determined. Determining the first item volume may comprise use of the method 200 for determining a volume. By use of the method 200, the entity volume may be determined and the entity volume may be based on the entity subspace.

In particular, determining 102 the first item volume may comprise receiving first item data (i.e. step 201), generating first item multi-dimensional digital signatures (i.e. step 202), and determining an item volume (i.e. step 203).

The first item data may comprise a plurality of first item data points. Each of the first item data points may relate to a respective first item.

As an example, the first item data may comprise sales data. That is, the first item data may be indicative of sales of the first items. That is, the first item data may contain one or more numbers indicative of the number of first items that have been sold in a corresponding time period.

As a further example, each of the first item data points may correspond to a respective purchase of an item. That is, where a particular item has been sold twice, the first item data may comprise two item data points. In this way, the first item data may be indicative of sales of an item.

In some examples, prior to generating the first item multi-dimensional digital signatures, a threshold may be applied to the first item data. That is, in some examples, only first item data points relating to popular items may be used to generate the first item multi-dimensional digital signatures. As a particular example, first item data for items that have been sold more than five hundred times in a particular time period may be used and first item data for items that have been sold less than five hundred times may be discarded. In this way, the first multi-dimensional digital signatures may correspond to popular items only.

Each of the first item data points may comprise text and / or image data. The text of each of the first item data points may comprise a text description of the respective first item. In some examples, text description may comprise a description of a type (e.g. a bag), a feature (e.g. waterproof), and / or a colour (e.g. red) of the respective first item. Additionally or alternatively, the text may comprise a related season (e.g. summer), a price, a label and / or brand associated with the respective first item. The first item data points may comprise numerical data. The price may be stored as numerical data. The image data may comprise one or more images depicting the respective first items. The one or more images may be real-world images i.e. captured by use of an image sensor.

As described above, determining 102 the first item volume may comprise use of the method 200. By use of the method 200, the first item volume may be determined and the first item volume may be based on the first item subspace.

Returning to Figure 1 and the method 100, at step 103, a consumer volume is determined. Determining 103 the consumer volume may comprise use of the method 200 for determining a volume.

In particular, determining 103 the consumer volume may comprise receiving consumer data (i.e. step 201), generating consumer multi-dimensional digital signatures (i.e. step 202), and determining a consumer volume (i.e. step 203).

The consumer data may comprise a plurality of consumer data points. Each one of the consumer data points may relate to a respective consumer. The consumers may comprise, for example, consumers in a target market. In general, the consumer data may relate to shopping habits of the consumers.

In some examples, the consumer data may relate to each consumer's ownership of an item (or a class of items). That is, based on a consumer's purchase history, the consumer data may indicate whether a consumer already owns an item (e.g. a particular bag) or an item belonging to a class (e.g. any bag).

In some examples, the consumer data may relate to each consumer's attitudes towards an item or brand. In some examples, the consumer data may relate to one or more interactions events between each consumer and a representation of an item or brand.

As set out above, in some examples, the entity data may comprise data relating to subscribers of the entity. Additionally or alternatively, the consumer data may comprise data relating to subscribers of the entity. That is, the consumers may be the subscribers of the entity. For example, in examples in which the entity is a user of social media, the consumers may be followers of the user of social media.

By use of the method 200, the consumer volume may be determined and the consumer volume may be based on the volume subspace.

The method 100 may comprise use of timing data. As discussed above, each of the entity data points may comprise timing data. Additionally, each of the first item data and consumer data may comprise respective timing data. In some examples, each data point may comprise respective timing data. Timing data corresponding to each entity data point may relate to when a respective publication was published e.g. when a post on social media was posted. Timing data corresponding to each first item data point may relate to when a respective first item was sold. Timing data corresponding to each consumer data point may relate to when a respective item was purchased by the consumer. In this way, the multi-dimensional space (into which the multi-dimensional digital signatures are generated) may comprise one or more dimensions which correspond to time.

The method 100 may comprise use of price data. For example, each of the first item data points may comprise a price corresponding to each item. Each of the consumer data points may indicate a price paid by the respective consumer for a respective purchase. Each of the entity data points may indicate an expected price that a respective subscriber might pay for an item.

At step 104, second item data is received. The second item data may comprise a plurality of second item data points. For example, the second item data may comprise a catalogue of items. The catalogue of items may correspond to items that are on sale and / or available to be put on sale. That is, in examples where the items are products, the second items may be items that are stocked by a retailer and available for purchase. Additionally or alternatively, the second items may not be currently stocked by the retailer but may be available to be stocked. In examples where the items are services, the second items may be services that are able to be provided.

Each one of the plurality of second item data points may relate to a respective second item. That is, each second item data point may relate to a different second item.

Each of the plurality of second item data points may comprise text. The text of each of the second item data points may comprise a text description of the respective second item. In some examples, text description may comprise a description of a type (e.g. a bag), a feature (e.g. waterproof), and / or a colour (e.g. red) of the respective second item. Additionally or alternatively, the text may comprise a related season (e.g. summer), a price, a label and / or brand associated with the respective second item. The second item data points may comprise numerical data. The price may be stored as numerical data.

Each of the plurality of second item data points may comprise image data. The image data may comprise one or more images depicting the respective second items. The one or more images may be real-world images i.e. captured by use of an image sensor.

At step 105, second item multi-dimensional digital signatures are generated. The second item multi-dimensional digital signatures may be generated by processing each of the second item data points. The second item multi-dimensional digital signatures may be generated using the digital signature generator (i.e. the same digital signature generator used at step 202 of the method 200). Put differently, the second item data points may each be encoded to generate a second item encoding.

At step 106, second item multi-dimensional digital signatures are identified. That is, the second item multi-dimensional digital signatures that fall within an intersection are identified. The intersection may be an intersection of the entity volume, first item volume and the consumer volume (as determined at steps 101, 102, and 103, respectively). In this way, the determined volumes may act as a filter to identify second item multi-dimensional digital signatures.

At step 107, second items are selected. In other words, the second items that correspond to the identified second item multi-dimensional digital signatures are selected. In some examples, the identified second item multi-dimensional digital signatures may be decoded to determine the corresponding second items. Put differently, a decoder may be used. In other examples, a look-up table may be used to select the second items. In other words, a look-up table may be generated when then second item multi-dimensional digital signatures are generated. That is, when each second item data point is processed to generate the second item multi-dimensional digital signatures, both the second item data point and the second item multi-dimensional digital signature may be recorded in a look-up table. Thus, each second item can be selected by finding, in the look-up table, each identified second item multi-dimensional digital signature.

By use of the methods described herein, the second items that are selected may be popular with subscribers of the entity. That is, in examples in which the entity is a user of social media, the method 100 can be used to predict which second items are likely to be bought by followers of the users. As discussed above, the data points may comprise timing data and thus when the intersection of the volumes is used as a filter, time dependence of the data points may be taken into account. Thus, by use of timing data, trends e.g. seasonal trends may be accounted for when predicting which second items may be popular. Likewise, events that occur after a particular time period may be accounted for.

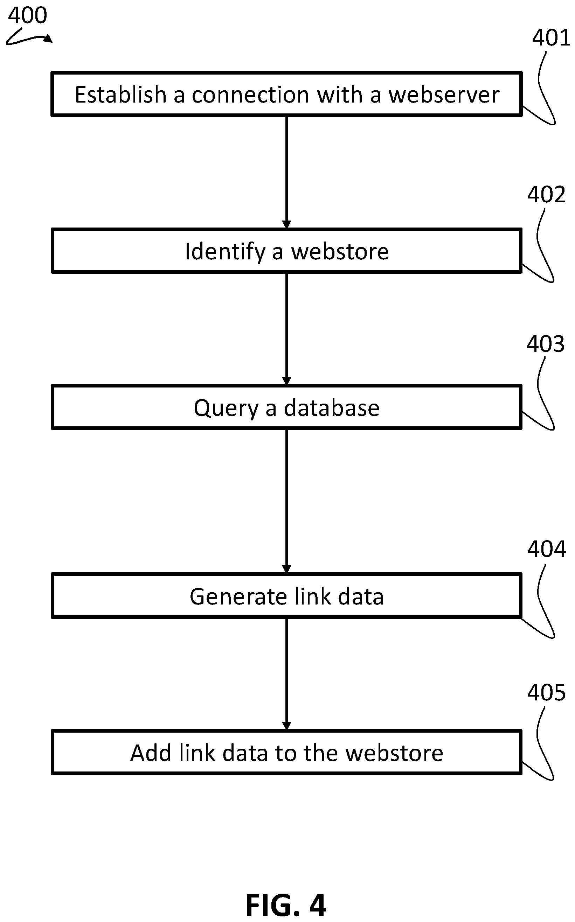

At step 108, a webstore is populated. That is, the webstore may be populated in response to selecting the one or more second items. The webstore may be populated using the example method 400 that is depicted in Figure 4.

Figure 4 is a flow diagram of an example method 400 for populating a webstore. At step 401, a connection is established with a webserver. At step 402, a webstore is identified. At step 403, a database is queried. At step 404, link data is generated. At step 405, link data is added to the webstore. While the method 400 may described in relation to a second item, it will be appreciated that certain steps of the method 400, for example, querying 403 the database, generating 404 link data and adding 405 the link data to the webstore may be performed multiple times, once for each selected second item.

At step 401, a connection is established with a webserver. The webserver may host webpages associated with a retailer. In other words, the webserver may host a website of the retailer. The website may be a retail website and may be referred to as a webstore.

At step 402, a webstore is identified. The webstore may be associated with the entity. The webpage may be identified using the entity data. For example, a name of the entity may be extracted from the entity data and used to identify the webpage associated with the entity. Alternatively, the webserver may have, or be provided with, a look-up table that allows a webstore to be identified based on a portion of the entity data.

It will be appreciated that the term "associated with" means related to, or having a link (such as a financial link) with the entity, such that a user accessing the webstore associated with the entity will understand that the webstore is associated with the entity. It will be further appreciated that the webstore associated with the entity may not need input from or the agreement of entity. The webstore associated with the entity may not be owned by the entity. Likewise the webstore associated with the entity may be a portion of a larger webstore. That is, the webstore associated with the entity may be one or more pages of a larger webstore and the one or more pages may be associated with the entity. Put differently, the webstore associated with the entity may be a virtual shop front that is related to the entity.

In some examples, the method 400 may comprise determining that a webpage associated with the entity does not exist. In such examples, the method 400 may further comprise generating a webpage associated with the entity.

At step 403, a database is queried. The database may be queried to identify an existing item listing i.e. an existing item listing that corresponds to the second item.

The method 400 may comprise determining that an item listing does not exist for the second item. The method 400 may further comprise, in response to determining that an item listing does not exist for the second item, generating an item listing that correspond to the second item.

At step 404, link data is generated. The link data may provide a link to the existing item listing. That is, by use of the link data, a user may navigate to the item listing for the second item, thereby allowing the user to purchase the second item. As an example, the link data may be a HTML link. The link data may be a database link i.e. that links a portion of a first database to a second database.

At step 405, link data is added to the webstore. Once the link data has been added to the webstore, third parties may be able to purchase the selected second item from the webstore

Returning to Figure 1, the method 100 may further comprise removing second items from the webstore. That is, the method 100 may comprise identifying one or more second item multi-dimensional digital signature do not fall within the intersection. Accordingly, the second items that correspond to the second item multi-dimensional digital signatures that do not fall within the intersection may be determined as deselected items. In examples in which there is at least one deselected item, the method 400 may comprise identify link data that links an item listing for the deselected item and removing the second link data from the webstore. In this way, items that are not expected to be popular (based on the method 100) may be removed from the webstore.

The method 100 may further comprise adjusting stock levels in response to selecting the one or more second items. For example, stock levels of the selected one or more second items may be increased. In examples where the selected one or more second items are already stocked by the retailer, the stock levels may be increased. In examples where the selected one or more second items are not already stocked by the retailer, the selected one or more second items may be stocked. In examples in which there are one or more deselected items, adjusting stock levels may comprise cancelling orders for stock or reducing prices of the deselected items.

The methods 100, 400 may further comprise addition and removal of second items in response to user input. That is, user input related to a particular item may be received. In response to the user input, the particular item may be added to, or removed from, the webstore as discussed above.

It will be appreciated that while some actions are described (e.g. adjusting stock levels), the method 100 may comprise causing an action to be carried out (e.g. causing stock levels to be adjusted).

While the method 100 has been described above in relation to determining volumes (at steps 101, 102 and 103), it will be appreciated that, as an alternative, a corresponding likelihood function may be optimised. For example, an entity likelihood function may be optimised based on the entity subspace. The entity likelihood function may be used in place of the entity volume to identify (at step 106) the second item multi-dimensional digital signatures. Similarly, a first item likelihood function and a consumer likelihood function may be optimised and used. As a further alternative, a single likelihood function may be optimised based on the entity subspace, the first item subspace and the consumer subspace. The single likelihood function may be used (at step 106 as an alternative to the intersection) to identify the second item multi-dimensional digital signatures.

It will be appreciated that other volumes may be determined and used to form the intersection in addition or as an alternative to those described above. For example, a second entity volume may be determined based on second entity data. The second entity may be a second publisher e.g. a second user of social media. The intersection may (used at step 106) be an intersection of the entity volume, first item volume, the consumer volume and the second entity volume. In this way, the second item multi-dimensional digital signatures may be popular with subscribers of both the user of social media and the second user of social media. As a further example, for each potential customer that navigates to the webstore, a customer volume may be determined based on customer data. The customer volume may be used with the intersection to provide a selection of second items that is personalised to that particular customer.

It will also be appreciated that one or other volumes may be used as a veto. That is, identifying 106 the second item multi-dimensional digital signatures may comprise vetoing multi-dimensional digital signatures based on a particular volume. For example, an intersection may be used (as described above) to identify a first set of item multi-dimensional digital signatures and a subset of the first set of item multi-dimensional digital signatures may be removed based on the veto based on the particular volume.

While the method 100 has been discussed above in relation to selecting one or more second items, it will be appreciated that the method 100 may be used with data relating to a plurality of draft publications to identify one or more draft publications. That is, the identified one or more draft publications may be popular with the consumers and / or may be particularly effective at driving traffic towards the webstore selling items. Alternatively, the method 100 may be used with data to identify consumers for which the entity and the items are popular.

It will be appreciated that the data used to perform the method 100 may be updated. For example, the first item data may be updated repeatedly to show up to date sales data. In this way, the method 100 may be performed repeated and may form a feedback loop that is based on updated data.

Figure 5 shows an example computer system 500. The methods 100, 200 400 may be implemented on a computer system, such as the computer system 500. The computer system 500 may comprise a central processing unit 510, memory 520, one or more storage devices 530, an input / output processor 540, circuitry to connect the components 550 and one or more input / output devices 560.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively, or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a mark-up language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a track-ball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method performed on a system of one or more computers, the method comprising: for each entity of a plurality of entities:
receiving, at a processor of the one or more computers, entity data relating to an entity and comprising a plurality of entity data points, the plurality of the entity data points comprising text and image data;
processing, at the processor, the plurality of entity data points using a digital signature generator to generate one or more entity multi-dimensional digital signatures in a multi-dimensional space, the one or more entity multi-dimensional digital signatures defining an entity subspace within the multi-dimensional space;
determining an entity volume based on the entity subspace;
receiving, at the processor, first item data comprising a plurality of first item data points, each one of the plurality of first item data points relating to a respective first item and comprising text and image data;
processing, at the processor, the plurality of first item data points using the digital signature generator to generate a one or more first item multi-dimensional digital signatures in the multi-dimensional space, the one or more first item multi-dimensional digital signatures defining a first item subspace within the multi-dimensional space;
determining a first item volume based on the first item subspace;
receiving, at the processor, consumer data comprising a plurality of consumer data points, each one of the plurality of consumer data points relating to a respective consumer;
processing, at the processor, the plurality of consumer data points using the digital signature generator to generate one or more consumer multi-dimensional digital signatures, the one or more consumer multi-dimensional digital signatures defining a consumer subspace within the multi-dimensional space;
determining a consumer volume based on the consumer subspace;
receiving, at the processor, second item data comprising a plurality of second item data points, each one of the plurality of second item data points relating to a respective second item and comprising text and image data;
processing, at the processor, each one of the second item data points using the digital signature generator to generate a respective second item multi-dimensional digital signatures;
identifying, by the processor, one or more second item multi-dimensional digital signatures that fall within an intersection of the entity volume, the first item volume and the consumer volume;
selecting, by the processor and based on the identified one or more second item multi-dimensional digital signatures, one or more second items that correspond to the identified one or more second item multi-dimensional digital signatures;
responsive to selecting the one or more second items, populating a webstore associated with the entity by:
establishing a connection with a webserver;
identifying, using the entity data, the webstore hosted by the webserver and associated with the entity;
for each one of the selected one or more second items:
querying a database to identify an existing item listing for the selected second item;
generating link data to link the existing item listing; and
adding the link data to the webstore to enable third parties to purchase the selected second item from the webstore.

2. The method of claim 1 wherein the digital signature generator is an embedding neural network;
the one or more entity multi-dimensional digital signatures are one or more entity embeddings;
the one or more first item multi-dimensional digital signatures are one or more first item embeddings;
the one or more consumer multi-dimensional digital signatures are one or more consumer embeddings; and
the second item multi-dimensional digital signatures are one or more second item embedding.

3. The method of claim 1 or 2, wherein each one of the plurality of entity data points further comprises:
video data;
location data; and / or
audio data.

4. The method of claim 1, 2 or 3, wherein:
determining the entity volume comprises determining the entity volume as the entity subspace;
determining the first item volume comprises determining the first item volume as the first item subspace; and
determining the consumer volume comprises determining the consumer volume as the consumer subspace.

5. The method of any preceding claim, wherein each one of the plurality of entity data points comprises data relating to one or more publication.

6. The method of any preceding claim, wherein each of the plurality of entity data points, the first item data points, the plurality of consumer data points, and the plurality of second item data points further comprise timing data.

7. The method of any preceding claim, further comprising:
storing, in computer readable memory of the one or more computers, the first item volume;
receiving, subsequent to the storing and from the computer readable memory, the first item volume.

8. The method of any preceding claim, wherein one or more of the plurality of second item data points relates to a respective second item that is not currently stocked by the webstore; and
wherein the method further comprises, responsive to a second item being selected that is not currently stocked by the webstore:
causing stock levels of the second item to be changed.

9. The method of any preceding claim, further comprising:
responsive to identifying that one or more second item multi-dimensional digital signatures do not fall within the intersection, determining that the respective one or more second items is a deselected item;
responsive to determining the deselected item:
identifying second link data that links an item listing for the deselected item; and
removing the second link data from the webstore associated with the entity.

10. The method of any preceding claim, further comprising:
receiving user input to select a third item;
responsive to receiving the user input to select the third item:
generating third link data to link an item listing for the third item; and
adding the third link data to the webstore to enable third parties to purchase the third item from the webstore.

11. The method of any preceding claim, further comprising:
receiving user input to deselect a fourth item;
responsive to receiving the user input to deselect the fourth item
identifying fourth link data that links an item listing for the fourth item; and removing the fourth link data from the webstore associated with the entity.

12. The method of any preceding claim, wherein each one of the consumer data points relates to:
the respective consumer's ownership of an item;
the respective consumer's ownership of a class of an item;
the respective consumer's attitudes towards an item or brand;
an interaction event between the respective consumer and a representation of an item or brand; and / or
one or more previous purchases made by the respective consumer.

13. A non-transitory machine-readable medium storing instructions that, when executed by processing circuitry, cause the processing circuitry to perform the method of any preceding claim.

14. A system comprising:
processing circuitry; and
a memory storing instructions that, when executed by processing circuitry, cause the processing circuitry to perform the method of one of claims 1 to 12.
